Europäisches Patentamt

European Patent Office

Office européen des brevets

(11) Veröffentlichungsnummer: **0 207 455**
**A2**

(12) # EUROPÄISCHE PATENTANMELDUNG

(21) Anmeldenummer: 86108747.6

(22) Anmeldetag: 26.06.86

(51) Int. Cl.⁴: **H 01 S 3/03**
**H 01 S 3/097, H 01 S 3/223**

(30) Priorität: 01.07.85 DE 3523519

(43) Veröffentlichungstag der Anmeldung:
07.01.87 Patentblatt 87/2

(84) Benannte Vertragsstaaten:
CH DE FR GB IT LI NL SE

(71) Anmelder: Siemens Aktiengesellschaft Berlin und
München
Wittelsbacherplatz 2
D-8000 München 2(DE)

(72) Erfinder: Seunik, Horst, Dr.
Hölzlring 11
D-8000 München 83(DE)

(72) Erfinder: Herziger, Gerd, Prof. Dr.-Ing.
Fasanenweg 2
D-6101 Rossdorf(DE)

(72) Erfinder: Schülke, Helmut, Dipl.-Phys. Dipl.-Ing.
Max-Reger-Strasse 4
D-6110 Dieburg(DE)

(72) Erfinder: Schmitt, Klemens, Dr. rer. nat.
Koblenzer Strasse 23
D-5439 Rothenbach(DE)

(72) Erfinder: Wester, Rolf, Dipl.-Phys.
Am Kleebach 32
D-5100 Aachen-Eilendorf(DE)

(54) Gaslaseranordnung.

(57) Ein Gaslaser mit transversaler, hochfrequenter Anregung wird durch den Einsatz einer Koppelstruktur, die im gesamten Entladungsraum eine zumindest annähernd ortsunabhängige elektrische Feldstärke pro Neutralteilchendichte gewährleistet, in seinem Wirkungsgrad und in seiner Leistungsdichte verbessert. Hierzu werden Kapazitätselektroden (2) und zwischen diesen der Entladungsraum eines Lasers in einem Hohlraumresonator angeordnet, wobei die gegenseitigen Abstände der Kapazitätselektroden (2) ortsabhängig und so gewählt sind, daß sie eine zur zugehörigen Neutralteilchendichte proportionale elektrische Feldstärke gewährleisten.

FIG 4

EP 0 207 455 A2

Gaslaseranordnung

Die Erfindung betrifft eine Gaslaseranordnung nach dem Oberbegriff von Patentanspruch 1. Eine derartige Gaslaseranordnung ist aus der DE-OS 33 27 257 bekannt.

Aus dem Artikel von C.L.Cuccia in RCA Review, März 1953, Seiten 72 bis 98, ist es bekannt, daß die Modulation eines Elektronenstrahles sehr hohe Werte erreichen kann, wenn in einem Hohlraumresonator in der Nähe des Elektronenstrahles Kapazitätselektroden angeordnet sind und die Spannung an den Kapazitätselektroden zur Modulation eingesetzt wird, indem die Elektronen abgebremst werden.

Die Aufgabe, die der vorliegenden Erfindung zugrundeliegt, besteht in der Stabilisierung und in der Erhöhung des Wirkungsgrades und der Pumpleistungsdichte, das heißt der eingekoppelten HF-Leistung pro Volumen der Laserentladung einer Gaslaseranordnung gemäß dem Oberbegriff von Patentanspruch 1. Diese Aufgabe wird durch die kennzeichnenden Merkmale des Patentanspruchs 1 gelöst.

In einer derartigen Gaslaseranordnung ist der eigentliche Laser vorteilhaft in an sich bekannter Weise als optischer Resonator ausgebildet. Hiervon zu unterscheiden ist der Hohlraumresonator des Patentanspruchs 1, welcher den Entladungsraum des Lasers umgibt und mit der Anregungsfrequenz für den Laser angesteuert und in Resonanz gebracht wird. Dieser Hohlraumresonator speist die Kapazitätselektroden mit Hochfrequenz und die Kapazitätselektroden konzentrieren das vorhandene transversale elektrische Feld im Gasentladungsraum. So ergibt sich die erfindungsgemäße, besonders vorteilhafte Ansteuerung der Laserentladung. Diese Laserentladung muß jedoch gemäß den

Mhs 1 Lk/28.6.1985

weiteren Merkmalen des Patentanspruchs 1 im Entladungsraum ortsabhängig unterschiedlich stark angeregt werden, um einerseits Instabilitäten zu vermeiden, die bei zu hoher Feldstärke pro Neutralteilchendichte entstehen und andererseits im gesamten Anregungsbereich möglichst die maximal zulässige Feldstärke und damit eine hohe Ausbeute an Laserlicht zu erreichen.

Es hat sich nämlich gezeigt, daß bei UHF-Anregung mit bekannten Einkoppelstrukturen die Laserentladung nur am Ende des Entladungsraumes auftritt. Diese Erscheinung ist nach unserer Erkenntnis auf eine erhebliche ortsabhängige Dichtevariation während der HF-Anregung zurückzuführen, die bei kleineren Frequenzen bis etwa 30kHz nicht in vergleichbarem Ausmaße auftritt. Dazu kommt eine Frequenzabhängigkeit der Absorption im Medium. Diese Effekte lassen sich durch die erfindungsgemäße Gaslaseranordnung kompensieren.

Die ortsabhängige Neutralteilchendichte läßt sich aus den ortsabhängigen Werten für Druck und Temperatur in bekannter Weise berechnen, wobei die ortsabhängigen Werte für Druck und Temperatur durch übliche Sonden gemessen werden können. Auch die ortsabhängige elektrische Feldstärke in transversaler Richtung läßt sich durch bekannte Sonden messen.

Besonders große Vorteile ergibt eine Ausführungsform der Erfindung, in der der Laser konvektionell gekühlt ist und in der in Flußrichtung des Lasers ortsabhängig un- terschiedliche gegenseitige Abstände der Kapazitätselek- troden bestehen. In diesem Fall wird eine beträchtliche zusätzliche Dichtevariation des Lasergases, die im wesentlichen durch den Temperaturanstieg beim Durchlauf und durch Reibung an den Wänden hervorgerufen wird, ausgeglichen und dadurch eine hohe Laserlichtausbeute ermöglicht. Unter einem konvektionell gekühlten Laser sind in dieser Anmeldung alle Kühlungsarten zu verstehen, bei denen das Lasergas zur Kühlung aus dem Entladungsraum heraustransportiert wird.

Vorteilhaft beinhaltet die Gaslaseranordnung ein $CO_2$-Lasergas, wobei dessen $H_{101}$-Mode im Hohlraumresonator angeregt wird und wobei die Anregungsfrequenz zwischen 200MHz und 800MHz liegt. Einen einfachen Aufbau erhält man, indem das Lasergas in einem siolierenden Rohr untergebracht ist und indem die Strömung des Lasergases longitudinal ist, das heißt, in Richtung der optischen Achse des Lasers erfolgt. Eine besonders kompakte Ausführungsform ist gegeben, indem die Strömung des Lasergases transversal verläuft.

Einfach einstellbar ist eine erfindungsgemäße Gaslaseranordnung, bei der zumindest eine der Kapazitätselektroden in Strömungsrichtung des Lasergases in mehrere Teilelektroden aufgeteilt ist. Die Teilelektroden sind vorteilhaft zur Einstellung unterscheidlicher Abstände zur gegenüberliegenden Kapazitätselektrode verschiebbar ausgebildet. Sofern die erforderlichen Abstände mit ausreichender Genauigkeit als Funktion des Ortes bekannt sind, können auch durchgehende, entsprechend geformte Kapazitätselektroden eingesetzt werden.

Sofern nur eine Feineinstellung der Feldverteilung zur Anregung des Lasergases erforderlich ist, besitzen die Teilelektroden vorteilhaft der Laserentladung zugewandte Stirnflächen, die zur gegenüberliegenden Kapazitätselektrode geneigt sind und die zu erwartende Änderung des Abstandes zur benachbarten Teilelektorde annähernd nachbilden. Dabei können die Stirnflächen der Teilelektroden eben oder bereits an die Ortsfunktion der Abstände der Gegenelektrode angepaßt sein.

Die Pumpleistung im UHF-Bereich wird vorteilhaft über eine Koppelschleife in den Hohlraumresonator eingekoppelt, wobei diese Koppelschleife im Resonator in der Mitte seiner Ausdehnung in Richtung der Strömung des Lasergases angeordnet ist.

Eine erfindungsgemäße Gaslaseranordnung für ein übliches $CO_2$-Lasergas und für die Anregung mit einer Frequenz von etwa 500MHz weist die Merkmale auf, daß der Hohlraumresonator Quaderform besitzt, daß das Lasergas longitudinal durch ein Glasrohr von etwa 25mm bis 30mm Durchmesser strömt und daß die Länge des Resonatorraumes in Richtung des Rohres 415mm, seine Ausdehnung in Richtung des elektrischen Feldes der Kapazitätselektrode 130mm und seine Ausdehnung in der zu letzterer senkrechten Richtung 300mm beträgt und daß die Begrenzungsflächen des Quaders senkrecht zu den genannten Richtungen liegen. Bei dieser Dimensionierung wird der $H_{101}$-Mode angeregt.

Eine für viele Anwendungsfälle ausreichende Optimierung der Gasentladung im bezug auf Stabilität und Wirkungsgrad ist erreicht, wenn die Laserentladung entlang der Strömungsrichtung des Lasergases durch eine Variation der ortsbezogenen Abstände der Kapazitätselektroden auf konstante Helligkeit eingestellt ist.

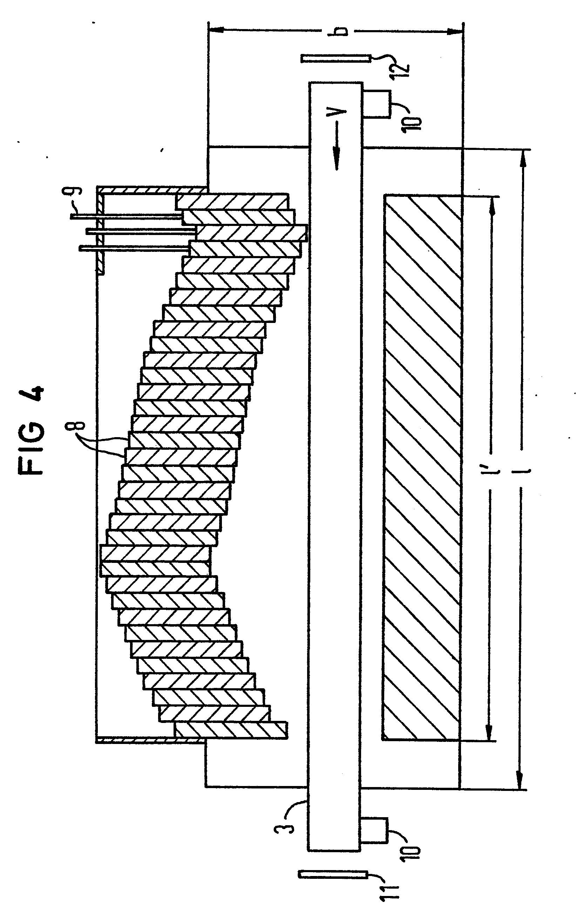

Die Erfindung wird nun anhand von sechs Figuren näher erläutert. Sie ist nicht auf die in den Figuren gezeigten Beispiele beschränkt. Die Figuren zeigen in schematischer Darstellung erfindungsgemäße Gaslaseranordnungen, wobei Fig. 4 ein bevorzugtes Ausführungsbeispiel darstellt.

Die Gaslaseranordnung enthält einen Hohlraumresonator, der im wesentlichen aus einem an den beiden Enden kurzgeschlossenen Rechteckhohlleiter 1 der Länge l besteht. Dieser Rechteckhohlleiter 1 ist mit zwei stegförmigen Kapazitätselektroden 2 mit der Länge l' versehen. Zwi-

0207455

schen den Kapazitätselektroden 2 ist koaxial zur Längsachse des Resonators ein Entladungsrohr 3 angeordnet,
welches an den Stirnflächen 4 des Rechteckhohleiters
aus diesem austritt. Durch Variation des gegenseitigen
Abstandes der Kapazitätselektroden 2 kann die elektrische transversale Feldstärke E variiert werden. Durch
eine gegenseitig geneigte Anordnung der Kapazitätselektroden 5, 6 läßt sich eine Feldvariation entlang der
Längsachse 7 des Resonators erzielen. Das Entladungsrohr 3 ist durch eine übliche Anordnung von Spiegeln
11, 12 bekannter Bauart zu einem optischen Resonator
ergänzt und weist Pumpenanschlüsse 10 auf (Fig. 4).

Mit dem beschriebenen Hohlraumresonator läßt sich erfindungsgemäß in ein Lasergas Hochfrequenzenergie im
UHF-Bereich mit einem hohen Wirkungsgrad einkoppeln.
Eine Laseranregung im UHF-Bereich hat den Vorteil, daß
die Gasentladung über eine Amplitudenmodulation der
Pumpleistung mit einer höheren Frequenz gepulst angeregt werden kann als mit einem vergleichbaren System
im HF-Bereich, das heißt unter 30MHz. Im Gegensatz zu
dem letztgenannten Frequenzbereich läßt sich jedoch
eine Laserentladung hoher Leistung im UHF-Bereich mit
den bisher bekannten kapazitiven transversalen Energie
Einkopplungen nicht anregen.

Für einen $CO_2$-Laser läßt sich die erfindungsgemäße
Einkopplung der Energie in einem Frequenzbereich von
200MHz bis 800MHz vorteilhaft einsetzen. Das Lasergas
des $CO_2$-Lasers setzt sich dabei vorteilhaft aus
$He:CO_2:N_2$ mit den Volumenanteilen 8:1:1 zusammen.

Ein Gaslaser der beschriebenen Art muß bei hoher Leistung stark gekühlt werden. Dies erfolgt durch Konvektion, das heißt, das Lasergas wird mit hoher Geschwindigkeit durch das Laserrohr gepumpt und nötigenhalls
durch einen Wärmetauscher geführt. Während des Durchlaufens durch das Laserrohr heizt sich beim Betrieb das Lasergas sehr schnell auf, es expandiert, die Neutralteilchendichte nimmt in Flußrichtung des Lasergases ab. Aus dieser Erkenntnis entstand die bevorzugte Ausführung der Erfindung gemäß Fig. 4, nach der zumindest eine Kapazitätselektrode 2 in eine Reihe von Teilelektroden 8 unterteilt ist und diese Teilelektroden 8 zur gegenüberliegenden Kapazitätselektrode 2 unterschiedliche Abstände aufweisen. Dadurch wird die Feldstärke proportional zur längenbezogenen Neutralteilchendichte variiert. Einige oder auch alle Telelektroden 8 können durch Haltestäbe 9 verschiebbar ghealten sein, so daß sich ihr Abstand zur gegenüberliegenden Kapazitätselektrode 2 einstellen läßt.

Der Verlauf der Neutralteilchendichte in der Strömungsrichtung V des Lasergases läßt sich beispielsweise aus der Temperaturverteilung im Laserrohr berechnen, die Feldverteilung kann somit durch entsprechende Abstände der Teilelektroden von der gegenüberliegenden Kapazitätselektrode proportional zur Neutralteilchendichte eingestellt werden. Für viele Anwendungsfälle ist jedoch eine ausreichende Homogenisierung erreicht, wenn die Laserentladung im Bereich der verschiedenen Teilelektroden auf gleiche Helligkeit eingestellt wird.

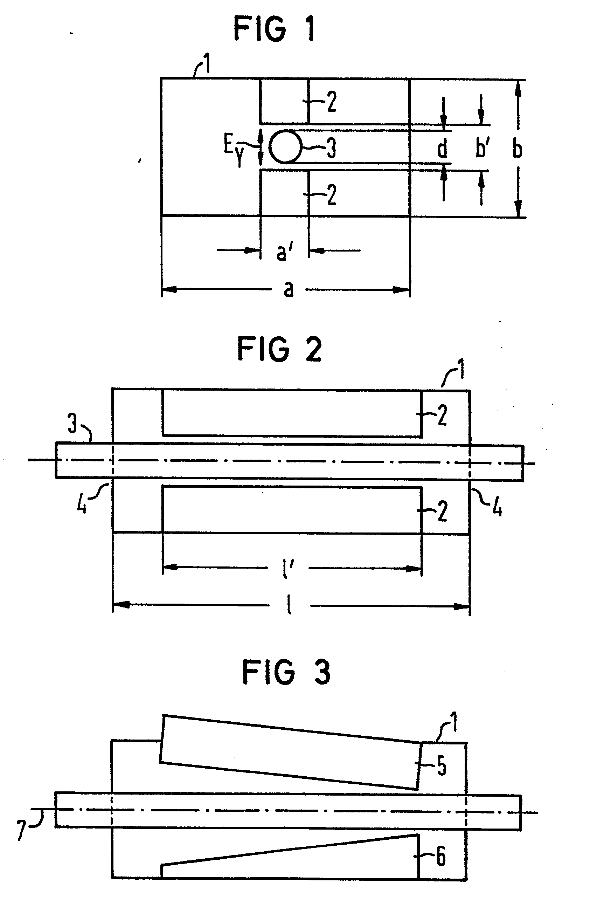

Die Dimensionierung des Hohlraumresonators basiert auf den Gesetzen der Hohlleitertheorie und kann nach den folgenden Angaben für einen quaderförmigen Hohlraumresonator durchgeführt werden, wobei die Bezeichnungen der Abmessungen aus Fig. 1 und 2 zu ersehen sind.

Voraussetzung: $b \leq a < l$

Die Resonatorfrequenz des kapazitiv belasteten Resonators ist durch das Verhältnis der Seitenlängen $a'/a$ und $b'/b$, durch die Absolutwerte der Seitenabmessungen und durch die Längen $l$ und $l'$ gegeben.

Die Resonatorfrequenz $f_{R\,H\,10P}$ des $H_{10P}$-Modes ist durch die Gleichungen

$$l = p \cdot \frac{\lambda_{gH10}}{2} \tag{1}$$

$p = 1, 2, 3, \ldots$

$l$ = Länge des Resonators

$\lambda_{gH10}$ = Hohlleiterwellenlänge des $H_{10}$-Modes (Grundmode)

und $\quad \lambda_{g\,H10} = \dfrac{c}{f_{R_{H10P}} \cdot [1-(c/(f_{R_{H10P}} \cdot {}_{cH10})^2]^{1/2}} \tag{2}$

$c$ = Lichtgeschwindigkeit

$\lambda_{cH10}$ = Grenzwellenlänge des $H_{10}$ - Modes

bestimmt.

Für die Grenzfrequenz $f_{cH10}$ des $H_{10}$ - Modes gilt

$$f_{cH10} = c/\lambda_{cH10} \tag{3}$$

Mit den Gleichungen (1), (2) und (3) folgt für die Resonanzfrequenz

$$f_{R_{H10P}} = \frac{c \cdot p}{2 \cdot l} \left[1 + \left(\frac{2l \cdot f_{c\,H10}}{p \cdot c}\right)^2\right]^{1/2} \tag{4}.$$

Werte für die Grenzwellenlänge $_{cH10}$ bei verschiedenen Seitenverhältnissen a'/a, b'/b lassen sich numerisch berechnen (vgl. hierzu N. Marcuvitz (Ed.), Waveguide Handbook, McGraw Hill 1951, S.400) und sind tabellarisch auf Seite 400 unten bis Seite 401 in N.Marcuvitz "Waveguide Handbook" und graphisch auf Seite 340 in H.Meinke, F.W. Gundlach "Taschenbuch der Hochfrequenztechnik", Springer-Verlag 1968 dargestellt.

Der Grundmode des Resonators ist der $H_{101}$ - Mode. Die Feldverteilung dieses Modes in einem unbelasteten Resonator ist auf Seite 469 in Meinke/Gundlach "Taschenbuch der Hochfrequenztechnik" dargestellt. Durch die kapazitiven Stege im Resonator wird die elektrische Feldstärke $E_y$ im Bereich der Resonatorachse erhöht, die Grenzfrequenz $f_{cH10}$ wird bei gleichbleibenden äußeren Dimensionen herabgesetzt siehe auch S. 340 in Meinke/Gundlach "Taschenb.d.Hochfr.".

Durch Einbringen des Entladungsrohres in den Resonator wird eine weitere Reduzierung der Resonanzfrequenz hervorgerufen, die aghängig ist von den Abmessungen des Entladungsgefäßes, der Positionierung innerhalb des Resonators und den dielektrischen Daten des Entladungsgefäßes. Weiterhin wird das Resonanzverhalten durch die Parameter der Gasentladung innerhalb des Rohres bestimmt.

Abmessungen eines bevorzugten, erprobten Resonators:

$$a = 300mm$$
$$a' = 78mm$$
$$b = 130mm$$
$$b' = 50mm$$
$$l = 415mm$$
$$l' = 340mm$$

Die Resonanzfrequenz $f_{R_{H101}}$ liegt bei etwa 500MHz (Resonator ohne Glasrohr).

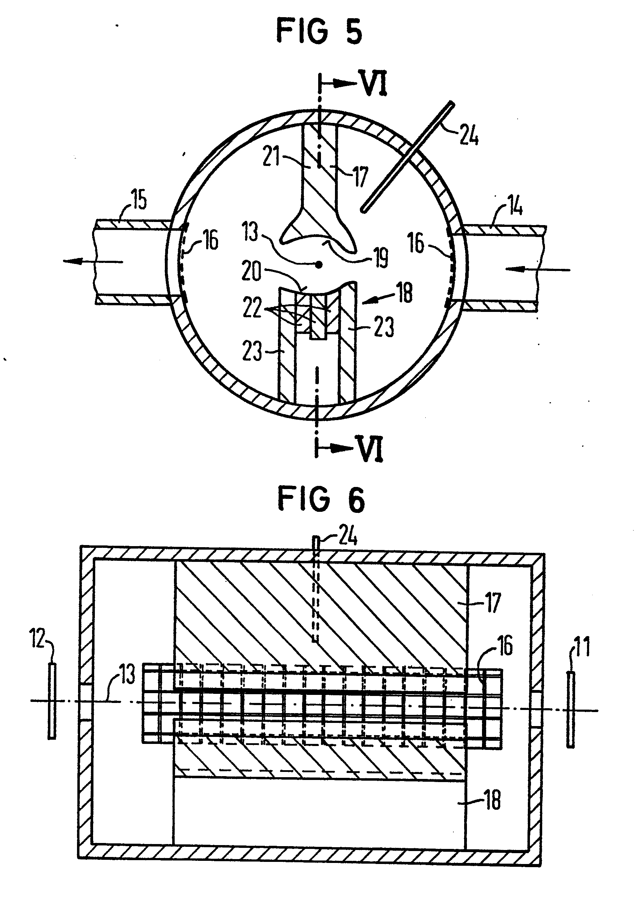

Eine besonders kompakte Ausführungsform der Erfindung ist in den Figuren 5 und 6 dargestellt. Hierbei ist der Hohlraumresonator als Zylinder ausgebildet. Die Flußrichtung des Lasergases entspricht der Pfeilrichtung. Sie verläuft quer zur optischen Achse 13 des Lasers. Das Lasergas wird über einen Einlaßkanal 14 mit rechteckförmigem Querschnitt dem Hohlraumresonator zugeführt und über einen Auslaßkanal 15 mit rechteckförmigem Querschnitt aus dem Hohlraumresonator abgeführt. Beide Kanäle sind über einen gasdurchlässigen Wandteil 16, der vorzugsweise aus einem Drahtgitter besteht, mit dem Innenraum des Hohlraumresonators verbunden. Diese gasdurchlässigen Wandteile 16 ermöglichen eine Gaszufuhr ohne eine unzulässige Störung der elektromagnetischen Resonanzschwingungen im Hohlraumresonator. In dieser Form wird als Grundmode der $H_{111}$-Mode angeregt, vgl. Meinke/ Gundlach, "Taschenbuch der Hochfrequenztechnik", Jahrgang 68, S.470.

Die Kapazitätselektroden 17 und 18 weisen einander zugewandte Stirnflächen auf, die in Flußrichtung des Lasergases ortsbezogen unterschiedliche Abstände voneinander besitzen und in der Laserentladung einen ortsunabhängigen Wert der elektrischen Feldstärke pro Neutralteilchendichte gewährleisten. Die Stirnflächen 19 und 20 der Kapazitätselektroden 17 und 18 begrenzen den Bereich der Laserentladung.

Die Kapazitätselektrode 17 weist einen gegenüber der Stirnfläche 19 zurückliegenden verjüngten Teil 21 auf, wodurch Materialersparnis möglich ist. Diese Ausführungsform eignet sich für unveränderliche Profile der Stirnfläche 19. Die gegenüberliegende Kapazitätselektrode 18 ist aus mehreren unterschiedlich geformten Teilelektroden 22 und 23 zusammengesetzt, wobei die Teilelektroden 23 zur Halterung der Teilelektroden 22 dienen. Die der gegenüberliegenden Kapazitätselektrode 17 zugewandten Stirnflächen der Teilelektroden 22 und 23 sind an die einzustellende ortsabhängige Entfernung zur Stirnfläche 19 der Kapazitätselektrode 17 angepaßt. Durch eine Verschiebung parallel zu den Teilelektroden 23 kann eine Feineinstellung für die Ortsabhängigkeit der Abstände zur Stirnfläche 19 vorgenommen werden.

Bei ausreichender Konstanz der Anregungsbedingungen kann auch die Elektrode 18 ähnlich der Elektrode 17 aufgebaut sein. Andererseits können nötigenfalls auch die Teilelektroden 23 durch die Außenwand des Resonators verlängert und von außen einstellbar gestaltet sein.

Die Spiegel 11 und 12 sind in üblicher Weise gestaltet und auf eine optische Resonanz der Laserentladung entlang der optischen Achse 13 eingestellt. Die UHF wird durch einen Koppelstift 24 eingekoppelt, welcher in an sich bekannter Weise gestaltet und in etwa in der Mitte der Ausdehnung des Hohlraumresonators in Richtung der optischen Achse des Lasers angeordnet ist.

11 Patentansprüche
 6 Figuren

## Patentansprüche

1. Gaslaseranordnung, in der zumindest zwei Kapazitätselektroden einander gegenüberliegen, mit einer hochfrequenten Wechselspannung beschaltet sind und eine Gasentladung anregen, wobei die optische Achse des Lasers parallel zu den Kapazitätselektroden liegt und womit eine transversale Einkopplung in den zwischen den Kapazitäts- elektroden befindliche Entladungsraum erfolgt, d a - d u r c h g e k e n n z e i c h n e t, daß die Ka- pazitätselektroden in einem Hohlraumresonator angeordnet sind, daß die Resonanz des Hohlraumresonators auf eine im UHF-Bereich liegende Mode-Frequenz mit einer radialen Komponente des elektrischen Feldes abgestimmt ist, daß zumindest eine Kapazitätselektrode zu der in bezug auf die Laserentladung gegenüberliegenden Kapazitätselektrode ein Profil aufweist, daß dieses Profil zu der gegenüberliegenden Kapazitätselektrode in der die Laserladung enthaltenden Fläche ortsabhängig unterschiedliche Abstände aufweist und daß diese Abstände so dimensioniert sind, daß die elektrische Feldstärke pro Neutralteilchendichte im Entladungsraum zumindest annähernd ortsunabhängig ist.

2. Gaslaseranordnung nach Anspruch 1, d a d u r c h g e - k e n n z e i c h n e t, daß der Laser konvektionell gekühlt ist und daß in der Flußrichtung des Lasergases ortsabhängig unter- schiedliche gegenseitige Abstände der Kapazitätselektroden bestehen.

3. Gaslaseranordnung nach einem der Ansprüche 1 oder 2, d a d u r c h g e k e n n z e i c h n e t, daß sie ein $CO_2$-Laser- gas enthält, daß durch das elektrische Feld des $H_{101}$-Modes im Hohlraumresonator angeregt wird und daß die Anregungsfrequenz zwischen 200MHz und 800MHz liegt.

4. Gaslaseranordnung nach einem der Ansprüche 1 bis 3, d a - d u r c h g e k e n n z e i c h n e t, daß zumin- dest eine der Kapazitätselektroden in Richtung der ortsabhängigen Abstände in mehrere Teilelektroden aufgeteilt ist.

5. Gaslaseranordnung nach Anspruch 4, d a d u r c h
g e k e n n z e i c h n e t , daß die Teilelektroden
zur Einstellung unterschiedlicher Abstände zur gegenüberliegenden Kapazitätselektrode verschiebbar ausgebildet
sind.

6. Gaslaseranordnung nach Anspruch 5, d a d u r c h
g e k e n n z e i c h n e t , daß die Teilelektroden
der Laserentladung zugewandte Stirnflächen besitzen,
die zur gegenüberliegenden Kapazitätselektrode geneigt
sind und die zu erwartende Änderung des Abstandes zur
benachbarten Teilelektrode annähernd nachbilden.

7. Gaslaseranordnung nach einem der Ansprüche 2 bis 6,
d a d u r c h   g e k e n n z e i c h n e t , daß
die UHF über eine Koppelschleife in den Hohlraumresonator
eingekoppelt wird und daß diese Koppelschleife in der
Mitte der Längsausdehnung (1) des Resonators angeordnet
ist.

8. Gaslaseranordnung nach einem der Ansprüche 2 bis 7,
d a d u r c h   g e k e n n z e i c h n e t , daß
der Hohlraumresonator Quaderform besitzt, daß das Lasergas longitudinal durch ein Glasrohr mit einem Außendurchmesser von etwa 25mm bis 30mm strömt und daß die Länge
des Resonatorraumes in Richtung des Rohres 415mm, seine
Ausdehnung in Richtung des elektrischen Feldes der Kapazitätselektrode 130mm und seine Ausdehnung in der zu
letzterer senkrechten Richtung 300mm beträgt und daß
die Begrenzungsflächen des Quaders senkrecht zu den genannten Richtungen liegen.

9. Gaslaseranordnung nach einem der Ansprüche 4 bis 8,
d a d u r c h   g e k e n n z e i c h n e t , daß

die Laserentladung in Strömungsrichtung des Lasergases durch eine Variation der ortsbezogenen Abstände der Kapazitätselektroden auf konstante Helligkeit eingestellt ist.

10. Gaslaseranordnung nach Anspruch 2, d a d u r c h g e k e n n z e i c h n e t, daß die Flußrichtung des Lasergases zur optischen Achse des Lasers zumindest annähernd senkrecht steht und daß das Lasergas durch gasdurchlässige Wandteile in den Hohlraumresonator eingeblasen bzw. aus dem Hohlraumresonator ausgelassen wird.

11. Gaslaseranordnung nach Anspruch 10, d a d u r c h g e k e n n z e i c h n e t, daß zur Einkopplung der UHF in den Hohlraumresonator ein Koppelstift in der Richtung der optischen Achse in der Mitte des Resonators angeordnet ist.

1/3

## FIG 1

## FIG 2

## FIG 3

FIG 4

FIG 5

FIG 6